# EUROPEAN PATENT SPECIFICATION

(11) **EP 1 363 794 B1**
(45) Date of publication and mention of the grant of the patent: **24.05.2006**
(21) Application number: 01912125.0
(22) Date of filing: 27.02.2001
(51) Int. Cl.: B60G 21/00, B60G 21/05, B60G 21/055, B60G 17/015, B62K 5/04

(54) **THREE WHEELED VEHICLE WITH TILTING SUSPENSION SYSTEM**
SEITLICH NEIGBARES DREIRADFAHRZEUG
VEHICULE A TROIS ROUES AVEC SYSTEME DE SUSPENSION A INCLINAISON

(43) Date of publication of application: 26.11.2003
(73) Proprietor: APRILIA S.P.A., 33033 Noale (IT)
(72) Inventor: BEGGIO, Ivano, I-33033 Noale (IT)
(74) Representative: De Gregori, Antonella
(86) International application number: PCT/IT2001/000093
(87) International publication number: WO 2002/068228

(56) References cited:
- EP-A- 0 772 966
- WO-A-97/27071
- FR-A- 2 646 379
- GB-A- 2 279 047
- US-A- 4 660 853
- "THIS TRICYCLE IS NOT FOR KIDS" MECHANICAL ENGINEERING, ASME. NEW YORK, US, vol. 120, no. 2, 1 February 1998 (1998-02-01), page 12 XP000766194 ISSN: 0025-6501

## Description

The present invention refers to a device for locking the banking, i.e. rolling motion, of a pair of rolling wheels in an engine and/or motor driven vehicle having three or more wheels.

A vehicle of this kind is disclosed by the Italian patent application no. PN2000A000034, filed on June 2^{nd}, 2000 by this same Applicant.

While offering a number of undisputable, clear advantages, these vehicles have two major drawbacks, i.e. the need for the driver to put his/her feet down on the ground when the vehicle is brought to a standstill and to use a stand in order to put the vehicle in a resting condition. From this point of view, no substantial difference appears to exist in the behaviour of rolling-wheel vehicles and the far more widespread motor-cycles provided with only two wheels, since all of them practically lack any static balance.

A rolling-wheel vehicle is a double track vehicle having two rolling wheels on the front axle and possibly also on the rear one. Their spindles are in fact attached to a first end portion of respective springs, whose second end portion is attached to the end portions of a rocker lever having its fulcrum hinged on to the frame along the longitudinal mid-plane of the vehicle. When banking, said springs do extend and contract in the same manner and this enables a moving vehicle to behave in the same way of a traditional two-wheeled motor-cycle, i.e. to be able to take a well-defined configuration of dynamic equilibrium. Suitable devices, which are adapted to be actuated by the driver, are provided to lock the banking of the rocker lever and of the associated wheels so as to maintain the springs at a different elongation. The behaviour of the vehicle, when at a standstill or moving at a very low speed, is consequently much like a traditional four-wheeled motor-car, i.e. the vehicle is also permitted to have a configuration of static equilibrium.

In this prior-art solution, however, the actuation resp. the exclusion of the said locking devices occur, if not abruptly, in a manner independent from the actual state and configuration conditions of the vehicle, except for the running speed which, as stated above, must be nil or very low when the banking of the wheels is locked. A certain difficulty in driving the vehicle derives from both these characteristics.

It is known from "Mechanical Engineering", ASME, New York, Vol.120 No.2, a three wheeled vehicle having an automatic device for controlling the roll angle of the banking wheels according to the preamble of claim 1. However this document does not teach that the control of the roll angle is active only at standstill or below a certain speed limit.

From WO97/27071 is known a device for locking the tilting mechanism of the vehicle only at low speeds. However WO97/27071 does not teach to take into account at least a second parameter as input data from the control unit of the automatic device.

It therefore would be desirable, and is actually a main object of the present invention; to provide a locking device that is capable of acting on the rolling wheels of a vehicle of the kind being considered here, which proves to be superior with respect to the solution disclosed in the afore cited De Monge patent, and which is in particular reliable and easy to use.

According to the present invention, these and further objects are reached in an automatic device having the characterizing features as recited in the appended claims. Features and advantages will be more readily understood from the

following description of an embodiment of the present invention given by way of non-limiting example and shown the accompanying drawing.
- Figure 1 is a three-dimensional front view of a powered vehicle of the type being considered here, confined to the sole parts thereof which are directly relevant to the purposes of the present invention, in which the two front wheels, shown in their rolling state, are associated to a locking device according to the present invention;
- Figure 2 is a three-dimensional side view confined to the linkage mechanism connecting the two rolling front wheels with each other, as well as to the locking device illustrated in Figure 1;
- Figure 3 is a functional diagram relating to that part of the same device which refers to one of the two front wheels.

which order to find all relevance with and functional parts and details which have no direct relevance with the present invention, reference should be made to former patent publications, in particular the afore mentioned Italian patent application no. PN2000A000034. The present invention is applicable also to vehicles having rear rolling wheels like the one disclosed by WO-A-98 43872.

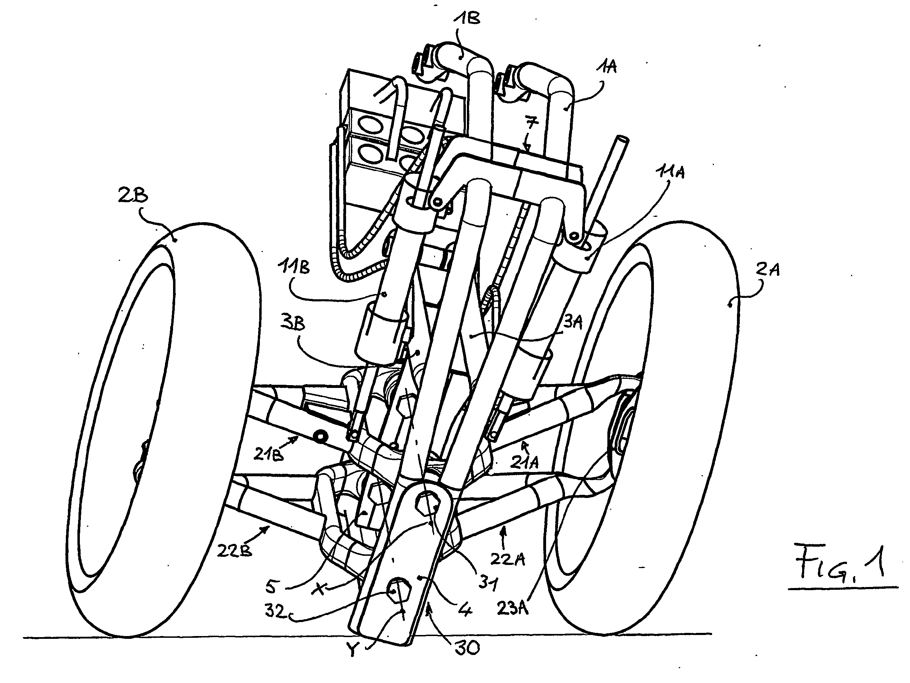

In Figure 1, only two steel tubes 1A, 1B which are a part of the loop frame and extend downwards in the front portion of the vehicle and the members 3A, 3B, 4 and 5 of a lattice-like structure 30 are shown. The structure 30 is welded to the tubes 1A, 1B and supports a linkage mechanism 20 connecting the front left-side wheel 2A and the front right-side wheel 2B with each other so as to enable them to not only steer, but also bank, i. e. roll, with respect to the longitudinal mid plane PM of the vehicle.

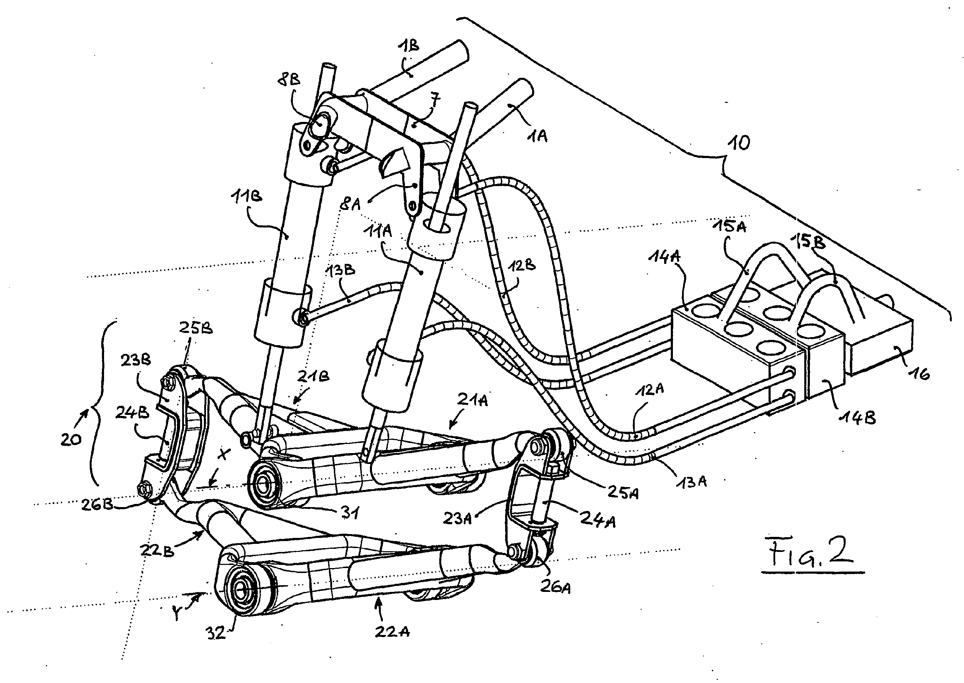

The linkage mechanism 20 comprises:
- a first pair 21A, 21B and a second pair 22A, 22B of rigid rods arranged above each other, which appear to be in a bifurcate shape when seen from above and are provided with central fulcra 31, 32 for being supported by the lattice-like structure 30 according to axes X, Y that are parallel to each other and lie on the above cited plane PM;
- two rigid members 23A, 23B that carry the spindles 24A, 24B of the wheels 2A, 2B;
- two pairs of ball-and-socket joints 25A, 26A and 25B, 26B between the rods 21A, 21B, 22A, 22B and the rigid members 23A, 23B - see Figures 1 and 2.

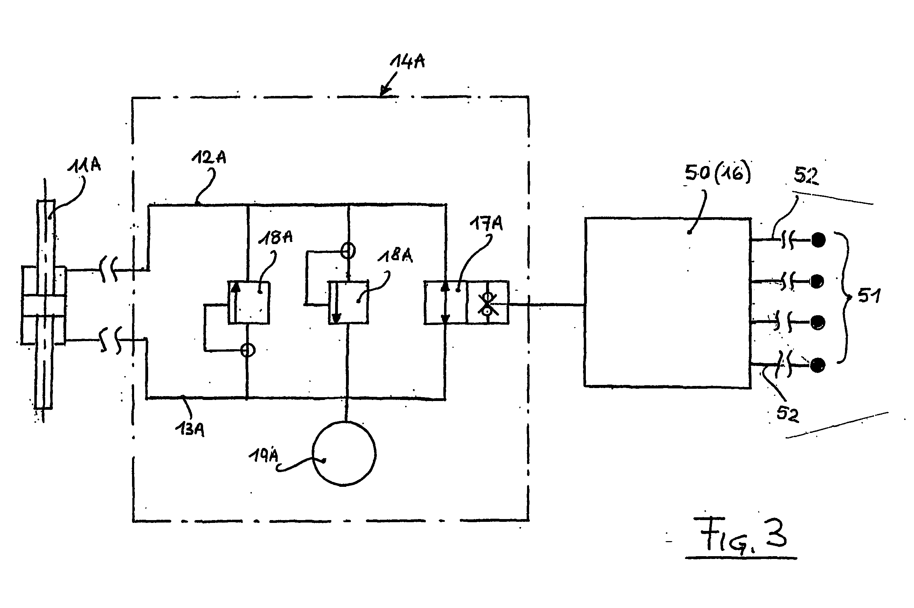

In the vicinity of their top portion, on to the pipes 1A, 1B there is welded the support 7 to the frame of a locking device according to the present invention, which is generally indicated at 10 in the drawing and is substantially constituted by following mechanical components:
- a first double-acting cylinder 11A, whose piston is linked to the rod 21A which is associated to the front left-side wheel 2A;
- a second double-effect cylinder 11B, whose piston is linked to the rod 21B which is associated to the front right-side wheel 2B;
- a first pair of oil pipes 12A, 13A which belong to a circuit comprising also the first cylinder 11A, a proportional (modulating) two-way valve 17A, for instance of the solenoid-type, and two one-way valves 18A provided to limit the pressure of the oil in the oil pipes 12A resp. 12B, which are arranged in parallel to the proportional valve 17A. All the said valve means, solely shown in the hydraulic diagram of Figure 3, are enclosed in a valve-holding block 14A, which can advantageously be attached to the frame of the vehicle under the vehicle saddle and also encloses a reservoir 19A pre-filled with oil. An electric line 15 ensure a connection between the valve means enclosed in the block 14A with a control unit 50, which shall be described in greater detail further on and is in turn enclosed in a box 16 that is also attached to the frame of the vehicle;
- a second pair of oil pipes 12B, 13B belonging to another circuit, identical to the preceding one, which also comprises the second cylinder 11B. The valve means and the oil reservoir (not shown) of this circuit are enclosed in a second valve-holding block 14B, situated behind the first block 14A and in turn connected through a second electric line 15B to the control unit 50.

To said control unit 50, which among other things comprises a microprocessor, there is further connected, via a corresponding number of conductor leads 52, a number n ≥ 2 of sensors 51 adapted to detect an equal number of signals referred to state and configuration parameters of the vehicle. Examples of parameters that are suitable to an implementation of the present invention are : speed, acceleration, pressure in the braking-circuit, opening state of the butterfly valve of the carburettor (or the fuel injection valve). The invention calls for the possibility for at least a part of the signals detected by sensors 51 to be displayed on the dashboard of the vehicle and to equip the vehicle with a manual control accessible by the driver for actuating resp. releasing the locking device 10 which can also provided with a corresponding signal display on the dashboard and/or acoustical indication facility.

According to a basic feature of the present invention, the control unit 50 processes, according to an operational programme properly defined when the vehicle itself is being designed, input data consisting of the signals detected by at least two of the said n sensors 51 to obtain an appropriate control of the two double-acting cylinders 11A, 11B. more precisely, the said input data form an n-dimension matrix having as result a well defined percentage value of opening (i.e. of the free cross-section) of the proportional valves such, as the one indicated at 17A, in the circuits also comprising the double acting cylinders 11A, 11B. Variations in one or more of said input signal (namely of the state and configuration conditions of the vehicle) have as a result corresponding different values of the percentage of opening of said proportional valves. The direction of the oil flow in the above mentioned circuits is determined by the banking of the two wheels 2A, 2B, i.e. by the inclination of the rods 21A, 21B (to which the lower end portions of the cylinders 11A, 11B are attached, as explained here above) in their relative movement about the axes X, Y of the fulcra 31, 32 with respect to the longitudinal mid plane PM of the vehicle. The oil arriving from the reservoirs, such as the one indicated at 19A, to the double-acting cylinders 11A and 11B results in a locking effect of the banking of the front wheels 2A, 2B with a progression that depends on the above cited percentage of opening of the proportional valves such as the one indicated at 17A, which in turn depends on the actual conditions of the vehicle.

One of the input data of the microprocessor of the control unit 50 is preferably the running speed of the vehicle, in such a manner as to enable, on obvious safety grounds, the device of the present invention to actually be operative only when the vehicle is either stopped or running at a speed that lies below a rather low limit speed.

By mere way of example, the following table shows the percentage of opening of each one of the proportional two-way valves such as the one indicated at 17A (output datum of the microprocessor of the control unit 50) as a function of the speed and the acceleration of the vehicle (input data of the microprocessor), as detected by the respective sensors 51 and received via the respective connection lines 52.

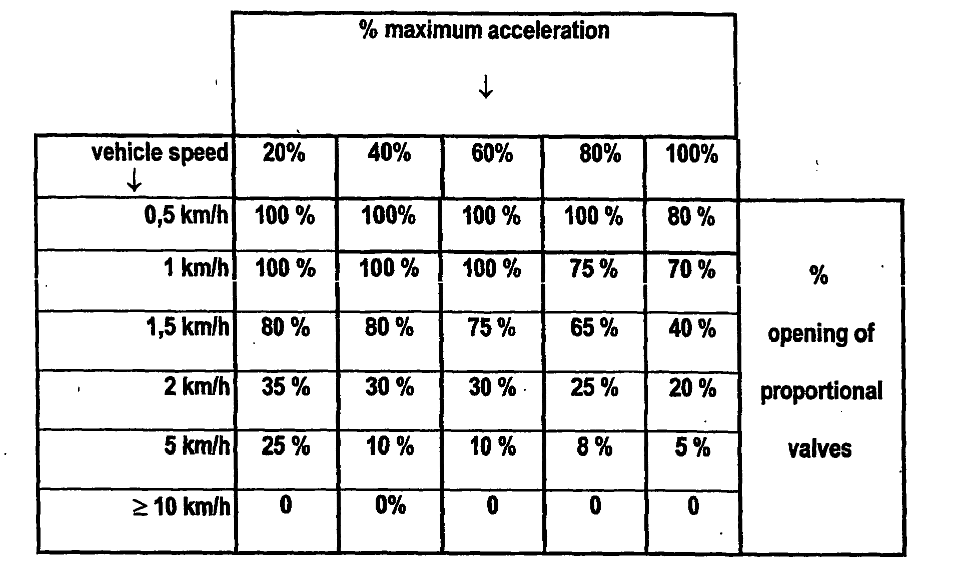

The values indicated in the above table (including the intermediate ones, obtained by interpolation, between the various input values) are defined exactly when the vehicle is being designed and, therefore, are usually different for the various models of a given manufacturer,

As the vehicle speeds up, e.g. after a stop commanded by traffic lights, depending also on the speed conditions, the proportional two-way valves such as the one indicated at 17A open, thereby enabling the oil to flow from the double-acting cylinders 11A, 11B with the result that the locking action is gradually terminated. Accordingly, as the vehicle keeps moving on, the two front wheels 2A, 2B with the linkage mechanism 20 will again be free of banking (rolling) with respect to the longitudinal mid plane PM about the axes X, Y of the fulcra 31, 32.

As far as the oil-pressure limiting valves such as the one indicated at 18A are concerned, the microprocessor of the control unit 50 enables them to be energized only when input data are received which indicate an emergency situation in driving the vehicle, such as for instance a situation of overpressure of the oil in the cylinder 11A and/or 11B brought about by at least one of the wheels 2A, 2B having bumped against an obstacle and the effects of such a bump having therefore been transmitted via the members of the linkage mechanism 20.

From the above description the advantages of the invention can be readily appreciated, namely :
- the vehicle is capable of temporarily taking a configuration of stable equilibrium, in a manner that takes into due account its actual conditions of the vehicle, as represented by the different state and configuration parameters which are detected by the sensors connected to the control unit. Therefore, the transition from a configuration of unstable equilibrium to a configuration of stable equilibrium, and vice-versa, takes place smoothly, in a condition of utmost safety, without giving rise to any inconvenience or trouble for the driver.
- the locking device makes use of proven components, which are easily available at a relatively low cost and very reliable.
- for the various models of vehicle made by a manufacturer, the components can be standardized while only the n ≥ 2 input data in the above referred matrix are selected during the design stage.

It will be further appreciated that, although the above description refers to a preferred embodiment of the present invention, a number of different variants and embodiments, some of which will be shortly mentioned below, may be developed without departing from the scope of the present invention as defined by the appended claims.

A simplified variant of the present invention does not require any use of the afore mentioned one-way oil-pressure limiting valves such as the one indicated at 18A.

Another simplified variant calls for the use of both double-acting cylinders 11A and 11B in a single circuit, so as to be fed in parallel by only one proportional two-way valve 17A and an oil compensating reservoir.

A further variant, which is more sophisticated than the above cited ones, but has the advantage of further improving the convenience in driving the vehicle, calls for the use of a reversible oil pump which, upon the banking of the front wheels 2A and 2B having been locked, reverses the oil flow in the cylinders 11A, 11B, so as to annul the banking.

A different embodiment of the present invention calls for the use of other operating means than the afore mentioned double-acting cylinders to lock the banking of the wheels. These means may for instance be reversing electric motors which, in response to the output of the control unit 50, either activate or de-activate mechanical joints that are associated to members of the linkage mechanism 20.

It will finally be appreciated that the present invention applies to both vehicles with front rolling wheels and vehicles with rear rolling wheels.

## Claims

1. Automatic device (10) - for the use in a powered vehicle *having three or more* wheels and a linkage mechanism (20) to connect *with* each other a pair of wheels (2A, 2B) so *that they are permitted to roll with respect to the longitudinal mid plane (PM) of the vehicle - comprising :*
- a *control unit (50) which uses as input data the signals it receives from sensors (51) arranged to detect state and configuration parameters of the vehicle, and*
- *operational* means (*11A*, *11B)* adapted *to* act on members (21A, *21B) of said linkage mechanism (20), which are associated to each such rolling wheel* (*2A*, *2B*) *so as to lock the banking of the said pair of wheels* (*2a*, *2B*),
**characterized in that** the said control *unit* is adapted to process said input *data to generate, only when the vehicle is either stopped or running at a speed that lies below a predetermined limit,* for each combination of n ≥ 2 input data, a single output signal giving rise to a modulated operation of said operational means (11A, 11B).

2. Automatic device according to claim 1, **characterized in that,** further to speed sensors, to said control unit (50) there are connected, in order to supply it with its input data, acceleration sensors and/or braking-circuit pressure sensors and/or inclination sensors and/or steering sensors and/or fuel flow-rate sensors.

3. Automatic device according to claim 1 or 2, **characterized in that** said operational means (11A, 11B) are attached to portions (1A, 1B) of the vehicle loop frame as well as to rigid rods (21A, 21B) which are connected to the spindles (24A, 24B) of the rolling wheels (2A, 2B) and are provided centrally with fulcra (31, 32) along axes (X, Y) that are parallel to each other and lie on the longitudinal mid plane (PM) of the vehicle.

4. Automatic device according to any of the preceding claims, **characterized in that** said operational means (11A, 11B) are double-acting cylinders, belonging to at least one hydraulic circuit which also comprises at least one proportional valve means (17A), preferably of the double effect type, which is adapted to receive said output signal processed by the control unit (50).

5. Automatic device according to claim 4, **characterized in that** each one of said double-acting cylinders (11A, 11B) is a component of a dedicated circuit comprising, in addition to said proportional valve means (17A), a pair of oil pipes (12A, 12B, 13A, 13B), a reservoir (19A) pre-filled with oil and oil-pressure limiting means (18A) adapted to only be energized in the presence of an emergency condition detected by the control unit (50).

6. Automatic device according to claim 4, **characterized in that** the double-acting cylinders (11A, 11B) are connected in parallel in a single circuit which also comprises, among others, a single proportional two-way valve means (17A) and an oil compensating reservoir.

7. Automatic device according to any claim 1 to 3, **characterized in that** said operational means (11A, 11B) comprise electric motors, preferably of the stepping type, each one of which receives said output signal processed by the control unit (50), and associated mechanical joints acting on elements of the said linkage mechanism (20).

8. Powered vehicle with three or more wheels, at least two (2A, 2B) of which are connected to each other by a linkage mechanism (20) enabling them to bank with respect to the longitudinal centre-line plane (PM), **characterized in that** it is equipped with an automatic device (10) according to at least one of the preceding claims.

9. Powered vehicle according to claim 8, **characterized in that** it comprises *per se* known means to display at least part of the signals that are detected by said sensors (51) and constitute the input data of the control unit (50).

## Patentansprüche

1. Automatikvorrichtung (10) zur Verwendung in einem Kraftfahrzeug mit drei oder mehr Rädern und einem Anlenkungsmechanismus (20) zum Miteinanderverbinden eines Paares von Rädern (2A, 2B), so dass ihnen eine Schräglage in Bezug auf die longitudinale Mittelebene (PM) des Fahrzeugs einzunehmen gestattet wird, umfassend:
- eine Steuer- und/oder Regeleinheit (50), die als Eingangsdaten die Signale verwendet, welche sie von Sensoren (51) empfängt, die zum Detektieren von Zustands- und Konfigurationsparametern des Fahrzeugs angeordnet sind, und
- Betriebsmittel (11A, 11B), die so ausgebildet sind, dass sie auf Glieder (21A, 21B) des Anlenkungsmechanismus (20) wirken, welche jedem derartigen eine Schräglage einnehmenden Rad (2A, 2B) zugeordnet sind, um so die Querneigung des Paares von Rädern (2A, 2B) festzustellen,
**dadurch gekennzeichnet, dass** die Steuer- und/oder Regeleinheit so ausgebildet ist, dass sie die Eingangsdaten verarbeitet, um nur dann, wenn das Fahrzeug entweder angehalten wird oder mit einer unter einer vorgegebenen Grenze liegenden Geschwindigkeit läuft, für jede Kombination von n = 2 Eingangsdaten ein einziges Ausgangssignal zu erzeugen, welches einen modulierten Betrieb der Betriebsmittel (11A, 11B) verursacht.

2. Automatikvorrichtung nach Anspruch 1, **dadurch gekennzeichnet, dass** zusätzlich zu Geschwindigkeitssensoren Beschleunigungssensoren und/oder Bremskreislaufdrucksensoren und/oder Neigungssensoren und/oder Lenkungssensoren und/oder Kraftstofffließratensensoren mit der Steuer- und/oder Regeleinheit (50) verbunden sind, um sie mit ihren Eingangsdaten zu versorgen.

3. Automatikvorrichtung nach Anspruch 1 oder 2, **dadurch gekennzeichnet, dass** die Betriebsmittel (11A, 11B) an Bereichen (1A, 1B) des Fahrzeugschleifenrahmens sowie an starren Stäben (21A, 21B), die mit den Spindeln (24A, 24B) der eine Schräglage einnehmenden Räder (2A, 2B) verbunden sind und zentral mit Drehpunkten (31, 32) entlang Achsen (X, Y) versehen sind, die parallel zueinander sind und auf der longitudinalen Mittelebene (PM) des Fahrzeugs liegen, festgelegt sind.

4. Automatikvorrichtung nach einem der voranstehenden Ansprüche, **dadurch gekennzeichnet, dass** die Betriebsmittel (11A, 11B) doppeltwirkende Zylinder sind, welche zu mindestens einem Hydraulikkreislauf gehören, der ferner mindestens ein Proportionalventilmittel (17A), vorzugsweise vom doppeltwirkenden Typ, welches so ausgebildet ist, dass es das von der Steuer- und/oder Regeleinheit (50) verarbeitete Ausgangssignal empfängt, umfasst.

5. Automatikvorrichtung nach Anspruch 4, **dadurch gekennzeichnet, dass** jeder der doppeltwirkenden Zylinder (11A, 11B) eine Komponente eines dedizierten Kreislaufs ist, der zusätzlich zu dem Proportionalventilmittel (17A) ein Paar Ölleitungen (12A, 12B, 13A, 13B), ein mit Öl vorgefülltes Reservoir (19A) und ein Öldruckbegrenzungsmittel (18A) umfasst, welches so ausgebildet ist, dass es nur in Gegenwart eines von der Steuer- und/oder Regeleinheit (50) detektierten Störfalls angesteuert wird.

6. Automatikvorrichtung nach Anspruch 4, **dadurch gekennzeichnet, dass** die doppeltwirkenden Zylinder (11A, 11B) in einem einzigen Kreislauf parallel geschaltet sind, der u.a. ein einziges Proportional-Zwei-Wege-Ventilmittel (17A) und ein Ölkompensationsreservoir umfasst.

7. Automatikvorrichtung nach einem der Ansprüche 1 bis 3, **dadurch gekennzeichnet, dass** die Betriebsmittel (11A, 11B) Elektromotoren, vorzugsweise vom Schrittmotorentyp, von denen jeder das von der Steuer- und/oder Regeleinheit (50) verarbeitete Ausgangssignal empfängt, und zugeordnete mechanische Gelenke, welche auf Elemente des Anlenkungsmechanismus (20) wirken, umfassen.

8. Kraftfahrzeug mit drei oder mehr Rädern, von denen mindestens zwei (2A, 2B) durch einen Anlenkungsmechanismus (20) miteinander verbunden sind, so dass sie in Bezug auf die longitudinale Mittellinienebene (PM) eine Schräglage einnehmen können, **dadurch gekennzeichnet, dass** es mit einer Automatikvorrichtung (10) nach mindestens einem der voranstehenden Ansprüche ausgestattet ist.

9. Kraftfahrzeug nach Anspruch 8, **dadurch gekennzeichnet, dass** es *per se* bekannte Mittel umfasst zum Anzeigen mindestens eines Teils des Signale, welche von den Sensoren (51) detektiert werden und die Eingangsdaten der Steuer- und/oder Regeleinheit (50) bilden.

## Revendications

1. Dispositif automatique (10) destiné à une utilisation dans un véhicule à moteur ayant trois roues ou plus et un mécanisme de liaison (20) pour connecter l'une avec l'autre une paire de roues (2A, 2B) de manière à ce qu'elles puissent tourner par rapport au plan médian (PM) longitudinal du véhicule, comprenant :
- un module de commande (50) qui utilise comme données d'entrée les signaux qu'il reçoit de capteurs (51) agencés de manière à détecter les paramètres d'état et de configuration du véhicule, et
- des moyens opérationnels (11A, 11B) appropriés pour agir sur des éléments (21A, 21B) dudit mécanisme de liaison (20), qui sont associés à chacune desdites roues rotatives (2A, 2B) de manière à bloquer l'inclinaison de ladite paire de roues (2A, 2B),
**caractérisé en ce que** ledit module de commande est approprié pour traiter lesdites données d'entrée pour générer, uniquement lorsque le véhicule est stoppé ou roule à une vitesse qui est inférieure à une limite prédéterminée, pour chaque combinaison de n ≥ 2 données d'entrée, un signal de sortie unique donnant lieu à un fonctionnement modulé desdits moyens opérationnels (11A, 11B).

2. Dispositif automatique selon la revendication 1, **caractérisé en ce que**, outre des capteurs de vitesse, sont connectés audit module de commande (50), afin de lui fournir leurs données d'entrée, des capteurs d'accélération et/ou des capteurs de pression de circuit de freinage et/ou des capteurs d'inclinaison et/ou des capteurs de direction et/ou des capteurs de débit de carburant.

3. Dispositif automatique selon la revendication 1 ou 2, **caractérisé en ce que** lesdits moyens opérationnels (11A, 11B) sont fixés sur des portions (1A, 1B) du cadre du véhicule ainsi que sur des tiges rigides (21A, 21B) qui sont connectées aux axes (24A, 24B) des roues rotatives (2A, 2B) et sont dotés centralement de points d'oscillation (31, 32) le long d'axes (X, Y) qui sont parallèles l'un à l'autre et sont sur le plan médian (PM) longitudinal du véhicule.

4. Dispositif automatique selon l'une quelconque des revendications précédentes, **caractérisé en ce que** lesdits moyens opérationnels (11A, 11B) sont des cylindres à double effet, appartenant à au moins un circuit hydraulique qui comprend également au moins un moyen de vanne proportionnelle (17A), préférablement du type à double effet, qui est approprié pour recevoir ledit signal de sortie traité par le module de commande (50).

5. Dispositif automatique selon la revendication 4, **caractérisé en ce que** chacun desdits cylindres à double effet (11A, 11B) est un composant d'un circuit dédié comprenant, outre ledit moyen de vanne proportionnelle (17A), une paire de tuyaux d'huile (12A, 12B, 13A, 13B), un réservoir (19A) pré-rempli d'huile et un moyen de limitation de pression d'huile (18A) approprié pour n'être activé qu'en présence d'une condition d'urgence détectée par le module de commande (50).

6. Dispositif automatique selon la revendication 4, **caractérisé en ce que** les cylindres à double effet (11A, 11B) sont connectés en parallèle dans un circuit unique qui comprend également, entre autres, un moyen de vanne proportionnelle deux voies unique (17A) et un réservoir d'équilibre d'huile.

7. Dispositif automatique selon l'une quelconque des revendications 1 à 3, **caractérisé en ce que** lesdits moyens opérationnels (11A, 11B) comprennent des moteurs électriques, préférablement du type pas-à-pas, dont chacun reçoit ledit signal de sortie traité par le module de commande (50), et des joints mécaniques associés agissant sur les éléments dudit mécanisme de liaison (20).

8. Véhicule à moteur avec au moins trois roues, dont au moins deux (2A, 2B) sont connectées l'une à l'autre par un mécanisme de liaison (20) leur permettant de s'incliner par rapport au plan central (PM) longitudinal, **caractérisé en ce qu'**il est équipé avec un dispositif automatique (10) selon au moins l'une des revendications précédentes.

9. Véhicule à moteur selon la revendication 8, **caractérisé en ce qu'**il comprend des moyens connus *per se* pour afficher au moins une partie des signaux qui sont détectés par lesdits capteurs (51) et constituent les données d'entrée du module de commande (50).
